Europäisches Patentamt

European Patent Office

Office européen des brevets

(11) Publication number: **0 450 701 A1**

# EUROPEAN PATENT APPLICATION

(21) Application number: 91200670.7

(51) Int. Cl.5: **C09D 5/24**

(22) Date of filing: **26.03.91**

(30) Priority: **05.04.90 US 504877**

(43) Date of publication of application:
**09.10.91 Bulletin 91/41**

(84) Designated Contracting States:
**DE FR GB IT NL SE**

(71) Applicant: **JOHN L. ARMITAGE & CO.**
**1259 Route 46**
**Parsippany, NJ 07054(US)**

(72) Inventor: **Fleming, Peter H.**
**501-1E Lindsley Drive**
**Morris Township, New Jersey 07960(US)**

(74) Representative: **Roggero, Sergio et al**
**Ing. Barzanò & Zanardo Milano S.p.A. Via**
**Borgonuovo 10**
**I-20121 Milano(IT)**

(54) **Conductive coating composition.**

(57) Improved electrically conductive coating compositions comprising an organic liquid vehicle and a pigment comprising nickel-aluminum alloy particles is provided.

EP 0 450 701 A1

The present invention relates to a conductive coating composition. More particularly, it relates to conductive coating compositions containing conductive particles such as metal particles. Most particularly, it relates to a conductive coating composition comprising nickel-aluminum alloy particles.

## BACKGROUNDOF THE INVENTION

It has long been known in the art that coatings and paints can be made electrically conductive by the inclusion therein of particulates comprised of matter having substantial electrical conductivity properties. A number of paints are known that incorporate electrically conductive metal particles or particles of carbon therein which can function to conduct static electricity, for example, accruing in a structure which the paint is protecting.

Historically, nickel or silver coatings have been used to attain the required ohm resistance in conductive coatings. Matheson, III, United States Patent No. 4,347,165 describes an electroconductive paint containing nickel particles in a liquid vehicle wherein the nickel particles have a stabilized electroconductive surface comprising a carbide and sulfur reaction product. Hajdu et al., United States Patent No. 4,663,240 describe employing a primary layer of a paint having active nickel particles dispersed therein and a second layer of electroless nickel onto an electrically nonconductive enclosure to produce an article having electromagnetic/radio frequency shielding. Sullivan, United States Patent No. 4,826,631, describes an aqueous based electrically conductive paint employing a nickel pigment and a surfactant useful in providing EMI and RFI shielding for electrical components. Nickel, however, has suffered from a degrading effect. After application to a surface, the nickel coating experiences migration or dislocation of some nickel particles from the nickel matrix, thereby degrading the continuity of the conductive matrix. Silver, on the other hand, while proving more stable, is prohibitively expensive.

It is also known in the art to employ coatings having aluminum particles. Rennier, et al., United States Patent No. 4,155,896 describes a composition comprising minute diameter fibers of various materials, including aluminum and aluminum-alloys dispersed in organic coatings such as polyurethanes and epoxy primers. Miller, United States Patent No. 4,585,901, discloses coating a substrate with aluminum particles by vapor deposition plating. The aluminum coatings, however, suffer from similar degradation and poor conductivity.

Corboy et al., United States Patent No. 4,490,282, disclose a conductive paint composition comprising a hardenable fluid binder; metal particles selected from the group of nickel particles, aluminum particles and mixtures thereof, carbon particles; a complexing agent and a coupling agent. Camelon et al., United States Patent Nos. 3,939,114 and 3,941,741, disclose powder paint compositions comprising thermoplastic encapsulated aluminum flakes, nickel powder and a film former.

None of the prior art references, however, disclose a conductive paint composition comprising a nickel-aluminum alloy pigment. Surprisingly, coating compositions comprising nickel-aluminum alloy particles provide excellent electroconductive properties and excellent stability from the degrading effects of aging and humidity exposure.

## BRIEFDESCRIPTION OF THE DRAWING

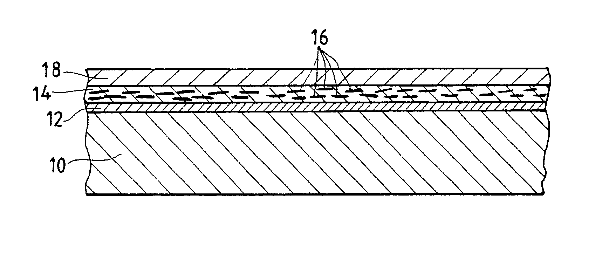

FIG. 1 illustrates a coating system of the present invention on the surface of an article.

## SUMMARYOF THE INVENTION

It is an object of the present invention to provide a coating composition with excellent electrical conductivity.

It is another object of the present invention to provide a composition which provides excellent electrical conductivity after aging and humidity exposure.

It is still another object of the present invention to provide a coating composition which employs a pigment comprising a nickel-aluminum alloy.

It is a still further object of the present invention to provide a coating composition which is useful in RFI and EMI applications.

To this end, according to the present invention, there is provided an electrically conductive coating composition comprising (a) a liquid vehicle; and (b) a pigment comprising nickel-aluminum alloy particles.

Also, according to the present invention there is provided a method for imparting electrical conductivity on nonconductive articles, and a method for providing a substrate with RFI and EMI shielding.

Also, according to the present invention, there are provided articles comprising an improved electrically

EP 0 450 701 A1

conductive surface coating.

## DETAILED DESCRIPTION OF THE PRESENT INVENTION

Liquid vehicles useful in the practice of the present invention are well known to those skilled in the art and widely available commercially. Typically, the liquid vehicles may comprise organic based liquids or water based liquids.

The conductive paint or coating in which the nickel-aluminum particles are dispersed can be of any organic liquid vehicle composition. Particularly preferred compositions are the commercially available polyurethane coating compositions which can be polyether or polyester based polyurethanes. These compositions are particularly effective as coatings on aircraft components. Another example of a suitable coating composition are the commercially available epoxy polymers or resins, e.g., the condensation product of bisphenol A and epichlorohydrin. Other coating compositions which can be employed include vinyl resins or polymers; acrylic resins such as acrylonitrile polymer; vinyls such as vinyl chloride polymers; vinyl-acrylic polymers; butadiene homopolymers and copolymers such as butadiene-styrene; silicone resins such as dimethyl polysiloxanes; melamine resins including melamine-formaldehyde; phenolic resins including phenol-formaldehyde; urea-formaldehyde; fluoroelastomers; polyolefins; polycarbonates; polyamides; mixtures of any of the foregoing and the like.

It is also contemplated that water based coatings and paints, such as latex paints, are to be employed.

The pigments useful in the practice of the present invention comprise nickel-aluminum alloy particles. The size of the nickel-aluminum particles can vary within a broad range but is preferably sufficiently small to enable the conductive coating composition to dry to a smooth surface finish, i.e., a surface requiring no sanding or polishing prior to the application of a decorative overcoat, when the conductive coating composition is applied as a thin coating, e.g., 5 mils or less.

As used herein, "mean particle size" refers to the weight mean diameter of the particles, as measured by a Microtac Particle Size Analyzer and means that about 50 percent of the particles have a particle size under the mean size and about 50 percent of the particles have a particle size over the mean size. It is preferred that the mean particle size of the particles range from about 5 microns to about 50 microns and more preferably from about 10 microns to about 30 microns.

It is also contemplated that the nickel-aluminum alloy particles be further alloyed with other metals. Preferred are nickel-aluminum particles which are chromium promoted and/or molybdenum promoted. Other useful promoting metals may include gold, silver, copper, tin and the like.

The nickel-aluminum alloy particles may be present in the composition in any amount. Preferably the coating composition comprises from about 30 to about 80 weight percent of nickel-aluminum particles based on the total weight of the coating composition, most preferably from about 45 to about 65 weight percent based on the total weight of the composition. A particularly suitable nickel-aluminum alloy is A-5000 50/50, Nickel-Aluminum Alloy Powder manufactured by Activated Metals and comprises 50 weight percent nickel and 50 weight percent aluminum although the alloy may comprise a wide range of nickel to aluminum ratios. Typically the density of the particles is from 1.0 to about 10.0 gram/liter preferably about 4.2 grams/liter and has a particle size distribution of +200 mesh (12.2 percent), +325 mesh (25.8 percent), and -325 mesh (61.7 percent).

It is further contemplated that the compositions of the present invention comprise additives which are known to those skilled in the art. Typically, the additives are selected from the group consisting of solvents or thinners, wetting agents, catalysts, coupling agents, suspending agents and the like.

The preferred compositions of the present invention contain a solvent or thinner such as a ketone, e.g. methyl isobutyl ketone (mibk), methyl ethyl ketone (mek), acetone; or aromatic solvents such as toluene or xylene; or mixtures thereof. Additional thinner may be added to provide suitable viscosity for the desired application, e.g. spraying, as is well known in the art. However, some resin or coating systems such as an epoxy system, can be sprayed without thinner. Where a thinner or solvent is employed, the amount of solvent or thinner used can range from about 1 to about 20 weight percent based on the total weight of the composition.

Preferred coating compositions exhibit a resistance of less than 50 ohms, preferably less than 10 ohms and most preferably less than 1 ohm.

In compounding the coating compositions of the present invention, the nickel-aluminum alloy particles are mixed and incorporated in suitable proportions with the liquid vehicle component, e.g., epoxy or polyurethane, generally containing a solvent or thinner. If appropriate for the particular application, additives such as a wetting agent and/or an acid catalyst may also be compounded into the composition.

Preferably the nickel-aluminum alloy particles and other desired components, are first loaded into a

3

steel ball mill and ground until a smoothness of about 6NS on a Hegman scale is obtained. The coating mixture is then filtered, such as through a 325 mesh screen, to ensure proper mean particle size.

The coating composition can be coated on the desired substrate by brushing, doctor blade, or by spraying, and then permitted to dry and harden generally at ambient conditions. Any suitable substrate or surface can be coated with the composition of the present invention including metallic and non-metallic substrates. Examples of metallic substrates include aluminum and titanium. Examples of non-metallic substrates include glass, plastics, fiberglass, advanced composites such as graphite-epoxy and polyimidequartz, and rubber.

The thickness of such coatings can range from about 0.0005 to about 0.025", e.g. about 0.003". Where the coating composition is used as a primer coat it is usually thinner, e.g., about 0.0005" to about 0.005". Multiple coats are often applied, such as an initial primer coat, e.g., an epoxy coating composition which may or may not contain the pigments according to the invention, and one or two top coats of a polyurethane composition, one or both of which can contain the pigment of the present invention. The total thickness of such multiple coats can range from about 0.001" to about 0.030", usually about 0.002" to about 0.015".

A suitable coating system is shown in FIG. 1. A substrate 10 has applied thereon an epoxy primer coat 12, a second epoxy coating 14 having dispersed therein random nickel-aluminum particles 16 of the present invention, and a polyurethane top coat 18. The substrate is the surface of a housing for electrical components, such as a computer housing. Additionally the coating may be employed on any substrate where electrical grounding, or EMI/RFI shielding is desired.

## DESCRIPTIONOF THE PREFFERED EMBODIMENTS

The following specific examples illustrate the present invention. However, they are not to be construed to limit the claims in any manner whatsoever.

## EXAMPLE1

62.90 weight percent of Ni-Al 5000 (Activated Metals), 8.14 weight percent of Cargill 57 5705 (Aroplaz® 6235, Cargill NL Chemicals), 9.79 weight percent of Araldite® 471-X-75 (Ciba Geigy), 6.29 weight percent of Cymel® 303 (American Cyanamid), 4.83 weight percent of methyl ethyl ketone, 0.21 weight percent of Nacure® 1419 (King Industries), 2.51 weight percent of Solvesso® 150, 0.50 weight percent of Byk® P-104-S (Byk Chemical), and 4.83 weight percent of PM acetate are loaded into a steel ball mill. The mixture is ground until a smoothness of 6NS on a Hegman scale is obtained and then filtered through a 325 mesh screen. A composition in accordance with the appended claims is obtained.

## EXAMPLES2 - 6

The procedure of Example 1 is for Examples 2-7 repeated except that the pigment and liquid vehicle are varied. In Examples 2, 4 and 5 the composition is a water borne acrylic (Y) prepared by combining, in a steel ball mill, 7.3 weight percent Alkyd Resin (R.C.I.), 0.4 weight percent Butyl carbitol, 0.5 weight percent Zinc phosphate (Heucatech); .2% weight percent driers (Ultra Adhesives), 0.1 weight percent Active 8 (Vanderbilt), 0.3 weight percent triethylamine, 0.4 weight percent Aqua Ammonia, 31.4 weight percent water; 8.6 weight percent Acrylic Emulsion (Rohm & Haas); 0.7 weight percent butyl cellosolve, 0.1 weight percent Nopco® NXZ (Henkel Co.); and 50 weight percent of the respective pigment.

In Examples 3 and 6 the composition is a water borne urethane (Z) prepared by combining, in a steel ball mill, 28.6 weight percent Neorez® 9649 (ICI), 21.4 weight percent water and 50 weight percent of the respective pigment. The resulting compositions were subjected to a humidity aging test and the resultant electrical resistance of the compositions was recorded. The results along with compositional data are set forth below in Table 1.

## TABLE 1:  HUMIDITY TEST

| Example | 1 | 2 | 3 | 4 | 5 | 6 |
|---|---|---|---|---|---|---|
| **Composition** | | | | | | |
| Pigment | A | A | A | B | C | C |
| Vehicle | X | Y | Z | Y | Y | Z |
| **Properties** | | | | | | |
| # of Cycles[a] | 14 | 10 | 10 | 10 | 10 | 10 |
| Resistance[b] | | | | | | |
| Initial | .2-.4 | .2-.7 | .3 | .5-3.2 | .3-.7 | .2 |
| Final | .2-.4 | .6-1.0 | .7-1.2 | 2.0-3.0 | .5-.9 | .6-.9 |

A    =  Ni/Al 5000
B    =  Ni/Al 4000(Chromium promoted)
C    =  Ni/Al 7000 (Molybdenum promoted)
X    =  Epoxy (Example 1)
Y    =  Water borne acrylic (above-described)
Z    =  Water borne urethane (above-described)
a    =  1 cycle = 4 hours at 66°C, 92% relative humidity followed by 4 hours at 66°C, 47% relative humidity
b    =  ohms/square inch

Table 1 above demonstrates the excellent retention of electro-conductivity properties of the coating compositions of the present invention. It is thought, although the inventor does not wish to be bound by any theory, that the ability of the Ni-Al alloy particles to resist expansion when exposed to heat and/or humidity decreases any migration or dislocation of the particles within the coating composition, thus providing excellent electroconductivity stability.

The above referenced patents are hereby incorporated by reference.

Many variations of the present invention will suggest themselves to those skilled in the art in light of the above-detailed description. For example, instead of an epoxy coating, any organic coating or latex paint may be employed. All such obvious modifications are within the full intended scope of the appended claims.

## Claims

1.  An electrically conductive coating composition comprising
    (a) a liquid vehicle; and
    (b) a pigment comprising nickel-aluminum alloy particles.

2.  A composition as defined in Claim 1 wherein said liquid vehicle comprises an organic coating material.

3.  A composition as defined in Claim 2 wherein said organic coating material comprises a polymer selected from the group consisting of polyurethane, epoxy polymers, vinyl polymers, acrylic polymers, vinyl-acrylic copolymers, fluoroelastomers, butadiene homopolymers and copolymers, silicone resins, melamine resins, phenolic resins, and mixtures of any of the foregoing.

4.  A composition as defined in Claim 3 wherein said organic coating material comprises an epoxy polymer.

5.  A composition as defined in Claim 3 wherein said organic coating material is a water based coating.

6.  A composition as defined in Claim 5 wherein said water based coating is selected from a water borne acrylic, a water borne urethane and a mixture thereof.

7. A composition as defined in Claim 1 wherein said particles have a mean particle size ranging from about 5 microns to about 50 microns.

8. A composition as defined in Claim 7 wherein said particles have a mean particle size ranging from about 10 to about 30 microns.

9. A composition as defined in Claim 1 wherein said nickel-aluminum alloy particles are present in an amount ranging from about 30 to about 80 weight percent based on the total weight of the composition.

10. A composition as defined in Claim 9 wherein said nickel-aluminum alloy particles are present in an amount ranging from about 45 to about 65 weight percent based on the total weight of the composition.

11. A composition as defined in Claim 1 which further comprises:
    (c) a solvent or a thinner.

12. A composition as defined in Claim 11 wherein said solvent or thinner is selected from the group of ketone, aromatic hydrocarbons, and a mixture thereof.

13. A composition as defined in Claim 1 which further comprises:
    (d) a wetting agent.

14. A composition as defined in Claim 1 which further comprises:
    (e) an acid catalyst.

15. A composition as defined in Claim 1 wherein said composition has a resistance of less than about 50 ohms.

16. A composition as defined in Claim 15 wherein said composition has a resistance of less than about 10 ohms.

17. A composition as defined in Claim 16 wherein said composition has a resistance of less than about 1 ohm.

18. An article having an improved electrically conductive surface coating comprising a metallic or non-metallic substrate coated with a coating composition as defined in Claim 1.

19. An article as defined in Claim 18 comprising a primer coat between said substrate and said coating composition.

20. An article as defined in Claim 19 further comprising a top coat.

21. An article as defined in Claim 18 wherein the thickness of said coating composition ranges from about 0.0005 inches to about 0.025 inches.

22. A method for improving the electrical conductivity of an article comprising applying to a metallic or non-metallic substrate a coating composition as defined in Claim 1.

23. A method for providing an article with EMI or RFI shielding comprising applying to a metallic or non-metallic substrate a coating composition as defined in Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 11, no. 141 (C-421)(2588) 08 May 1987, & JP-A-61 281167 (TOYO ALUM K.K.) 11 December 1986, * the whole document * | 1,2,11,12 | C 09 D 5/24 |
| A | DE-A-3 809 331   (DEGUSSA AG) * claim 1 * | 4 | |
| A | DE-A-3 432 998   (HUGO, GERD) * claims 1, 4, 5, 7 * | 5,6,7,8 | |
| | | | **TECHNICAL FIELDS SEARCHED (Int. Cl.5)** |
| | | | C 09 D |

The present search report has been drawn up for all claims

| Place of search | Date of completion of search | Examiner |
|---|---|---|
| The Hague | 15 July 91 | BUSCAGLIONE Y. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document